# EUROPÄISCHE PATENTANMELDUNG

(11) **EP 0 779 757 A2**
(43) Veröffentlichungstag der Anmeldung: **18.06.1997**
(21) Anmeldenummer: 96402723.9
(22) Anmeldetag: 12.12.1996
(51) Int. Cl.: H04Q 7/22, H04Q 7/26

(54) **Mobilfunksystem mit leitungsgebundenen Teilnehmeranschlüssen**

(30) Priorität: 16.12.1995 DE 19547110
(71) Anmelder: ALCATEL ALSTHOM COMPAGNIE GENERALE D'ELECTRICITE, 75008 Paris (FR)
(72) Erfinder: Veloso, Arthur, 73035 Göppingen (DE)
(74) Vertreter: Knecht, Ulrich Karl, Dipl.-Ing.

(57) **Zusammenfassung**

Es sind Mobilfunksysteme bekannt mit Mobilfunkvermittlungsstellen, an die mindestens eine private Nebenstellenanlage angeschlossen ist, um über diese leitungsgebundene Teilnehmeranschlüsse bereitzustellen. Die Nebenstellenanlagen benötigten aufwendige Vermittlungstechnik und sind nicht in der Lage mobilfunkspezifische Dienste an den leitungsgebundenen Teilnehmeranschlüssen zur Verfügung zu stellen.

Um ein einfach aufgebautes Mobilfunksytem (MRS) bereitzustellen, auf das auch leitungsgebundene Teilnehmer Zugriff haben, wird eine Mobilfunkvermittlungsstelle (MSC) vorgeschlagen, die eine Schnittstellenschaltung (IF) enthält zum Anschluß eines Konzentrators (FSU), der eine Vielzahl von Teilnehmeranschlüssen für leitungsgebundene Teilnehmerendgeräte (T1 bis Tn) bündelt. Somit wird jedes der leitungsgebundenen Teilnehmerendgeräte so angeschlossen, daß diese gleich wie Mobilfunkendgeräte behandelt werden. Vorteilhaft wird die Verwaltung der Teilnehmer an den leitungsgebundenen Teilnehmerendgeräten (T1 bis Tn) von einer Heimatdatei (HLR) durchgeführt und die leitungsgebundenen Teilnehmerendgeräte haben Kartenleseeinrichtungen für Berechtigungskarten (SIM).

## Beschreibung

Um in einem Mobilfunksystem leitungsgebundene Teilnehmeranschlüsse bereitzustellen, ist aus W0 94/2 60 73 bekannt, eine Mobilfunkvermittlungsstelle des Mobilfunksystems mit mindestens einer privaten Nebenstellenanlage zu verbinden, an die leitungsgebundene Teilnehmerendgeräte anschließbar sind. Eine der privaten Nebenstellenalagen ist Teil eines sogenannten "subscriber services arrangement", das auch Mobilfunkteilnehmern die Dienste anbieten, die die Nebenstellenanlagen den Teilnehmern an den leitungsgebundenen Teilnehmerendgeräten anbieten. In W0 94/26073 wird lediglich das Prinzip vorgestellt, Teilnehmer von leitungsgebundenen Teilnehmerendgeräten mittels privater Nebenstellenanlagen an eine Mobilfunkvermittlungsstelle anzuschließen. Welche Mittel hierzu in dem Mobilfunksystem, insbesondere in der Mobilfunkvermittlungsstelle, benötigt werden, ist dort nicht näher beschrieben. Da in dem bekannten Mobilfunksystem die leitungsgebundenen Teilnehmeranschlüsse mittels privater Nebenstellenanlagen bereitgestellt werden, wird eine aufwendige Vermittlungstechnik benötigt. Außerdem sind an den leitungsgebundenen Teilnehmeranschlüssen lediglich solche Dienste verfügbar, die von den privaten Nebenstellenanlagen, nicht aber vom Mobilfunksystem selbst bereitgestellt werden.

Aus dem Artikel "Feste Teilnehmeranschlüsse in Zellularfunksystemen" von J. M. Garcia Aguilera, erschienen in der Zeitschrift "Elektrisches Nachrichtenwesen", Ausgabe 1/1995, Alcatel Alsthom Publications S. A., Paris, ist ein Mobilfunksystem bekannt, an das leitungsgebundene Teilnehmerendgeräte angeschlossen werden können. Dazu wird dort eine Funkstation mit Teilnehmerleitungsschnittstellen, mit einem damit verbundenen Konzentrator und mit damit verbundenen Funksendeempfängern ausgestattet. Die Funksendeempfänger wiederum sind drahtlos mit einer Basisstation des Mobilfunksystems verbunden. Demnach entspricht die Funkstation einem ortsfesten Endgerät für mehrere ortsfeste Teilnehmer. Zwar werden diesen Teilnehmern Dienste durch das Mobilfunknetz bereitgestellt, jedoch wird dazu eine aufwendig aufgebaute Funkstation benötigt.

Aufgabe der Erfindung ist es, ein einfach aufgebautes Mobilfunksystem, auf das leitungsgebundene Teilnehmer Zugriff haben, und Mittel dafür anzugeben.

Gelöst wird die Aufgabe durch eine Mobilfunkvermittlungsstelle nach Anspruch 1 und durch ein damit ausgestattetes Mobilfunksystem nach dem nebengeordneten Anspruch.

Demnach enthält die erfindungsgemäße Mobilfunkvermittlungsstelle eine Schnittstellenschaltung zum Anschluß eines Konzentrators, der eine Vielzahl von Teilnehmeranschlüssen für leitungsgebundene Teilnehmerendgeräte bündelt.

Somit wird jedes der leitungsgebundenen Teilnehmerendgeräte an die Mobilfunkvermittlungsstelle so angeschlossen, daß diese die leitungsgebundenen Teilnehmerendgeräte gleich wie Mobilfunkendgeräte behandeln kann. Die Vermittlung von Rufverbindungen von und zu Teilnehmern innerhalb des Mobilfunksystems wird erfindungsgemäß von der Mobilfunkvermittlungsstelle durchgeführt unabhängig davon, ob der Teilnehmer ein Mobilfunkendgerät oder eines der leitungsgebundenen Teilnehmerendgeräte benutzt. Das erfindungsgemäße Mobilfunksystem ist sehr einfach aufgebaut, da hier als Mittel zum Anschluß der leitungsgebundenen Teilnehmerendgeräte lediglich eine Schnittstellenschaltung benötigt wird. Aufwendige Mittel wie etwa eine Nebenstellenanlage oder mehrere Funksendeempfänger sind nicht erforderlich.

Vorteilhafte Ausgestaltungen der Erfindung sind den Unteransprüchen zu entnehmen.

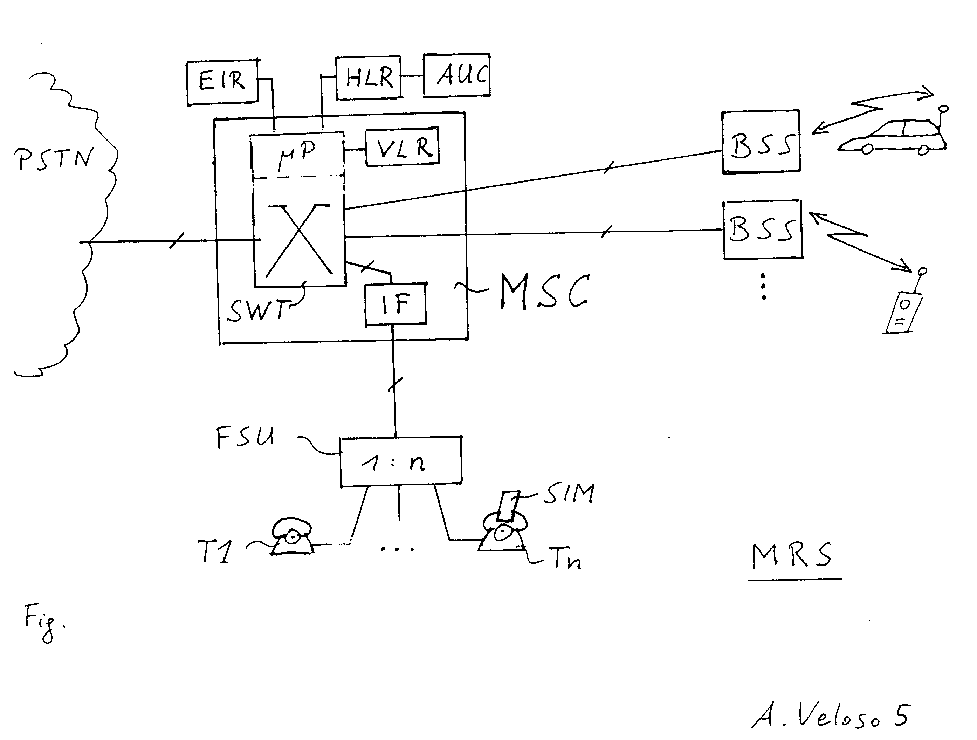

Im weiteren wird die Erfindung anhand eines Ausführungsbeispiels und mit Hilfe der einzigen Figur beschrieben, die schematisch den Aufbau eines Mobilfunksystems mittels einer erfindungsgemäßen Mobilfunkvermittlungsstelle zeigt.

In der Figur ist ein Mobilfunksystem MRS dargestellt, das zumindest eine Mobilfunkvermittlungsstelle MSC enthält, die mit einem öffentlichen Telefonnetz PSTN verbunden ist. Weiterhin enthält das Mobilfunksystem mehrere mit der Mobilfunkvermittlungsstelle verbundene Funkfeststationssteuerungen und daran angeschlossene Funkfeststationen zur Versorgung von Funkzellen, die zusammengenommen den Funkversorgungsbereichs des Mobilfunksystems bilden. In der Figur sind vereinfachend zwei sogenannte Basissubsysteme BSS dargestellt, die jeweils eine Funkfeststationssteuerung und mehrere Funkfeststationen umfassen. Diese Basissubsysteme sind etwa über PCM 30-Verbindungen mit der Mobilfunkvermittlungsstelle MSC verbunden, die sowohl Rufverbindungen innerhalb des Mobilfunksystems als auch Rufverbindungen zwischen dem Mobilfunksystem und dem öffentlichen Telefonnetz vermittelt. Zur Vermittlung solcher Rufverbindungen enthält die Mobilfunkvermittlungsstelle ein gesteuertes Koppelfeld SWT, das sowohl mit den Basissubsystemen BSS als auch mit dem öffentlichen Telefonnetz PSTN verbunden ist. Zur Steuerung des Koppelfeldes SWT werden prozessorgesteuerte Steuereinheiten PROC eingesetzt, von denen eine hier beispielshaft dargestellt ist.

Das hier dargestellte Mobilfunksystem MRS soll den Anforderungen nach dem GSM-Standard für zellulare Mobilfunknetze entsprechen. Dazu enthält das Mobilfunksystem folgende mit dem gesteuerten Koppelfeld verbundene Datenbanken: eine Gerätedatenbank EIR, eine Heimatdatei HLR, eine Authentifizierungszentrale AUC sowie eine Besucherdatei VLR. Die gemäß dem GSM-Standard geforderten Funktionen für diese Datenbanken sind nicht Gegenstand dieser Erfindung und sollen hier nur kurz angesprochen werden. In der Gerätedatenbank EIR sind Kennungen der in dem Mobilfunksystem verwendeten Endgeräte gespeichert. Zu diesen Kennungen werden etwa Sperrvermerke gespeichert, falls Endgeräte als gestohlen gemeldet werden und daher von einer Benutzung innerhalb des Mobilfunksystems ausgeschlossen werden sollen. Die Heimatdatei HLR enthält im Wesentlichen Daten über diejenigen Teilnehmer des Mobilfunksystems, die sich im Zuständigkeitsbereich der Mobilvermittlungsstelle MSC befinden. In der Heimatdatei HLR werden zum Beispiel Teilnehmerprofile abgespeichert, die angeben, welche Dienste die Teilnehmer innerhalb des Mobilfunksystems nutzen können und dürfen. In der Heimatdatei HLR ist auch der aktuelle Aufenthaltsort eines jeden Teilnehmers gespeichert durch einen Verweis auf die Besucherdatei, die für diesen Aufenthaltsort zuständig ist. Die Aufgabe der Authentifizierungszentrale AUC liegt im Wesentlichen darin, Geheimcodes für die Verschlüsselung von über die Funkwege übertragenen Daten zu sichern. Die Besucherdatei VLR, die in der Mobilfunkvermittlungsstelle MSC integriert ist, speichert Teilnehmerdaten von den Teilnehmern, die sich momentan im Bereich dieser Mobilfunkvermittlungsstelle befinden und die nicht in der Heimatdatei HLR gespeichert sind.

Der bisher beschriebene Aufbau des Mobilfunksystems MRS entspricht im Wesentlichen dem Aufbau eines zellularen Mobilfunksystems nach dem GSM-Standard (GSM: Global System for Mobile Communication). Um nun das Mobilfunksystem nicht nur für mobile Teilnehmer sondern auch für leitungsgebundene Teilnehmer zugänglich zu machen, wird erfindungsgemäß die Mobilfunkvermittlungsstelle MSC mit einer Schnittstelle IF ausgestattet, die mit dem gesteuerten Koppelfeld SWT verbunden ist und an die ein Konzentrator FSU angeschlossen ist, der mehrere Teilnehmeranschlüsse für leitungsgebundene Endgeräte T1 bis Tn bereitstellt.

Die Schnittstellenschaltung IF ist eine prozessorgesteuerte Schaltung, die hinsichtlich des gesteuerten Koppelfeldes SWT den Anschluß eines Basissubsystems nachbildet. Somit ist der Anschluß der Schnittstellenschaltung an dem gesteuerten Koppelfeld vergleichbar mit einem weiteren Anschluß eines solchen Basissubsystemes, wie eines der dargestellten BSS. Hinsichtlich des Konzentrators bildet die Schnittstellenschaltung einen Multiplexanschluß nach, hier beispielsweise einen PCM 30-Anschluß. Der Konzentrator FSU ist über eine mehrkanalige Leitung (Leitungsbündel) mit der Schnittstellenschaltung IF verbunden. Anstelle einer mehrkanaligen Leitung ist auch eine Verbindung mittels eines optischen Wellenleiters oder mittels einer Funkübertragungsstrecke denkbar. Dazu müßten jedoch die Schnittstellenschaltung und der Konzentrator zusätzlich elektrooptische Wandler bzw. Funksendeempfänger enthalten. Der Konzentrator FSU fächert nun das von der Mobilfunkvermittlungsstelle kommende Leitungsbündel auf die verschiedenen Teilnehmeranschlüsse T1 bis Tn auf. In umgekehrter Richtung werden die Teilnehmeranschlüsse mittels des Konzentrators gebündelt. Somit wirkt der Konzentrator FSU wie ein Demultiplexer bzw. ein Multiplexer. Der Konzentrator ist sehr einfach ausführbar und benötigt keine weiteren Funktionen, insbesondere keine Vermittlungsfunktionen.

Da jeder der Teilnehmeranschlüsse über den Konzentrator FSU und über die Schnittstellenschaltung IF an dem gesteuerten Koppelfeld SWT angeschlossen ist, wird jeder dieser Teilnehmeranschlüsse innerhalb der Mobilfunkvermittlungsstelle MSC wie ein Anschluß eines mobilen Teilnehmers behandelt. Erfindungsgemäß verwaltet die Heimatdatei HLR dazu jeden dieser Teilnehmeranschlüsse gleich wie einen Anschluß eines mobilen Teilnehmers. Die Mobilfunkvermittlungsstelle MSC vermittelt Rufverbindungen von und zu den Teilnehmern an den leitungsgebundenen Endgeräten gleich wie Rufverbindungen von und zu mobilen Teilnehmern an Mobilfunkendgeräten (mobile Teilnehmerendgeräte). Dazu ist jedem der leitungsgebundenen Teilnehmeranschlüsse eine Teilnehmerkennung zugeordnet, die in der Heimatdatei HLR abgespeichert ist.

Vorteilhaft kann nun die einem Teilnehmerendgerät zugeordnete Teilnehmernummer geändert werden, indem dieses Teilnehmerendgerät mit einer Lesevorrichtung zum Lesen von Speichermitteln SIM versehen ist, in denen Angaben zur Identifikation des Teilnehmers gespeichert sind, der momentan auf dieses Teilnehmerendgerät zugreift. Hier ist das Speichermittel eine sogenannte Berechtigungskarte (subscriber identity module), die einen Teilnehmer zum Zugriff auf das Mobilfunksystem berechtigt. Die Lesevorrichtungen in den leitungsgebundenen Teilnehmerendgeräten T1 bis Tn entsprechen sogenannten Kartenlesern, die diese Berechtigungskarten lesen können. Ein Teilnehmer kann somit nicht nur jedes beliebige mobile Teilnehmerendgerät innerhalb des Mobilfunksystems nutzen, sondern auch jedes der mit der Mobilfunkvermittlungsstelle MSC verbundenen leitungsgebundenen Teilnehmerendgeräten T1 bis Tn. Somit können durch Ausstattung der leitungsgebundenen Teilnehmerendgeräte T1 bis Tn diese gleich wie mobile Teilnehmerendgeräte von den Teilnehmern genutzt werden. Die an den Konzentrator FSU angeschlossenen Teilnehmerendgeräte T1 bis Tn bilden hier eine Gruppe von Teilnehmerendgeräten, die vergleichbar ist einer Gruppe von mobilen Teilnehmerendgeräten, die sich in einem Basissubsystem BSS befinden. Die Mobilfunkvermittlungsstelle MSC mit der Schnittstellenschaltung IF und die Heimatdatei HLR sind so ausgeführt, daß die Teilnehmer an den leitungsgebundenen Teilnehmerendgeräten gleich wie mobile Teilnehmer innerhalb eines Basissubsystemes behandelt werden. Somit bildet die erfindungsgemäß an die Mobilfunkvermittlungsstelle MSC angeschlossene Gruppe von leitungsgebundenen Teilnehmerendgeräten T1 bis Tn ein "virtuelles Basissubsystem".

Ein wie oben beschriebener Anschluß leitungsgebundener Teilnehmerendgeräte an eine Mobilfunkvermittlungsstelle ist besonders dort vorteilhaft einsetzbar, wo bereits eine Infrastruktur für mobile Teilnehmer besteht, jedoch zusätzlich eine einfach aufzubauende Infrastruktur für leitungsgebundene Teilnehmer gewünscht wird. Somit kann beispielsweise der Netzbetreiber des Mobilfunksystems den mobilen Teilnehmern auch leitungsgebundene Anschlüsse anbieten. Durch Anschluß von solchen leitungsgebundenen Teilnehmerendgeräten, die eine Kartenleseeinrichtung enthalten, kann sich der Teilnehmer sowohl über jedes Mobilfunkendgerät als auch über diese leitungsgebundenen Teilnehmerendgeräte mittels ein und derselben Berechtigungskarte in das Mobilfunksystem einbuchen.

Es ist auch denkbar, den Konzentrator weitab von der Mobilfunkvermittlungsstelle dort zu installieren, wo eine Funkversorgung aus technischen Gründen oder aus kommerziellen Gründen nicht angezeigt ist. Somit kann der Mobilfunknetzbetreiber auch Teilnehmern, die sich nicht im Funkversorgungsbereich seines Mobilfunksystemes befinden, mobilfunkspezifische Dienste anbieten.

Die Erfindung ist nicht nur, wie oben beschrieben, auf zellulare Mobilfunknetze anwendbar, sondern auf alle Mobilfunksysteme, die Vermittlungseinrichtungen enthalten.

## Patentansprüche

1. Mobilfunkvermittlungsstelle (MSC) mit einer Schnittstellenschaltung (IF) zum Anschluß eines Konzentrators (FSU), der eine Vielzahl (n) von Teilnehmeranschlüssen für leitungsgebundene Teilnehmerendgeräte (T1 bis Tn) bündelt.

2. Mobilfunkvermittlungsstelle (MSC) nach Anspruch 1, bei dem die Schnittstellenschaltung (IF) die mittels des Konzentrators (FSU) gebündelte Teilnehmeranschlüsse mit einem gesteuerten Koppelfeld (SWT) der Mobilfunkvermittlungsstelle (MSC) so verbindet, daß jeder der Teilnehmeranschlüsse gleich einem Mobilfunkteilnehmeranschluß mit dem Koppelfeld (SWT) verbunden ist.

3. Mobilfunkvermittlungsstelle (MSC) nach Anspruch 2, bei dem die Schnittstellenschaltung (IF) einen Multiplexer und einen Demultiplexer zum Anschluß des Konzentrators (FSU) über eine mehrkanalige Verbindungsstrecke (TRK) enthält.

4. Mobilfunkvermittlungsstelle (MSC) nach Anspruch 3, bei dem die Verbindungsstrecke eine Lichtwellenleiterstrecke oder eine Funkstrecke ist und bei dem die Schnittstellenschaltung (IF) elektrooptische Wandler oder einen Funksendeempfänger enthält.

5. Mobilfunkvermittlungsstelle (MSC) nach Anspruch 1, bei dem für die Vermittlung von Verbindungen zu den Teilnehmeranschlüssen die Schnittstellenschaltung (IF) mit einer Datenbank (HLR) verbunden ist, die Angaben enthält zur Identifikation der leistungsgebundenen Teilnehmerendgeräte (T1 bis Tn) oder von Teilnehmern, die die leistungsgebundenen Teilnehmerendgeräte (T1 bis Tn) benutzen.

6. Mobilfunkvermittlungsstelle (MSC) nach Anspruch 5, bei dem die Datenbank eine Heimatdatei (HLR) ist, die Angaben zu Mobilfunkteilnehmern und zu den Teilnehmern, die die Teilnehmerendgeräte (T1 bis Tn) benutzen, enthält.

7. Mobilfunksystem (MRS) mit einer Mobilfunkvermittiungsstelle (MSC), die eine Schnittstellenschaltung (IF) enthält zum Anschluß eines Konzentrators (FSU), der eine Vielzahl (n) von Teilnehmeranschlüssen für leitungsgebundene Teilnehmerendgeräte (T1 bis Tn) bündelt.

8. Mobilfunksystem (MRS) nach Anspruch 7, bei dem für die Vermittlung von Verbindungen zu den Teilnehmeranschlüssen die Schnittstellenschaltung (IF) mit einer Datenbank (HLR) verbunden ist, die Angaben enthält zur Identifikation von Teilnehmern, die die leistungsgebundenen Teilnehmerendgeräte (T1 bis Tn) benutzen, und bei dem jedes der Teilnehmerendgeräte (T1 bis Tn) eine Lesevorrichtung zum Lesen von Speichermitteln (SIM) enthält, in denen die Angaben zur Identifikation des jeweiligen Teilnehmers gespeichert sind.

9. Mobilfunksystem (MSR) nach Anspruch 7, bei dem die Speichermittel Berechtigungskarten (SIM) sind, die sowohl für Mobilfunkendgeräte als auch für die leistungsgebundenen Teilnehmerendgeräte (T1 bis Tn) lesbar sind.
